# EUROPEAN PATENT APPLICATION

(11) **EP 1 742 151 A1**
(43) Date of publication of application: **10.01.2007**
(21) Application number: 05734551.4
(22) Date of filing: 25.04.2005
(51) Int. Cl.: G06F 11/00

(54) **COMPUTER VIRUS UNIQUE INFORMATION EXTRACTION DEVICE, COMPUTER VIRUS UNIQUE INFORMATION EXTRACTION METHOD, AND COMPUTER VIRUS UNIQUE INFORMATION EXTRACTION PROGRAM**

(30) Priority: 26.04.2004 JP 2004129305
(71) Applicant: Incorporated National University Iwate University, Morioka-shi, Iwate 020-8550 (JP)
(72) Inventor: KOUI, Yuji, c/o Incorp. Nat. Univ. Iwate Univ., Morioka-shi, Iwate 020-8550 (JP); NAKAYA, Naoshi, c/o Incorp. Nat. Univ. Iwate Univ, Morioka-shi, Iwate 020-8550 (JP); KOIKE, Ryuuichi, Morioka-shi, Iwate 020-0066 (JP)
(74) Representative: Hitching, Peter Matthew
(86) International application number: PCT/JP2005/007814
(87) International publication number: WO 2005/103895

(57) **Abstract**

To enable quick extraction of computer virus identifying information.

A server 100 identifies an "Import Table" etc. of a header item of a specific region predetermined as a storage region of information able to be deemed as identifying in an exec file identified as a computer virus as a region of a signature item, reads out the content of the "Import Table" etc., and extracts it as a signature. Further, the server 100 combines a plurality of signatures to extract a new signature.

## Description

### TECHNICAL FIELD

The present invention relates to a computer virus identifying information extraction system for extracting computer virus identifying information used for detecting a computer virus, a computer virus identifying information extraction method in a computer virus identifying information extraction system, and a computer virus identifying information extraction program in a computer virus identifying information extraction system.

### BACKGROUND ART

In recent years, the Internet and other networks have rapidly grown. Along with this, the damage due to computer viruses has become increasingly serious every year. The damage due to computer viruses is great in terms of degree of severity since it is damage inflicted increasingly faster and on larger numbers of unrelated parties along with the elapse of time and it turns users who originally were victims into victimizers before they know it.

Computer viruses, according to the definition of the Japanese Ministry of Economy, Trade, and Industry, are considered to be programs created to deliberately inflict some sort of damage to programs or databases of third parties and have at least one of an auto infection function, lurking function, and pathogenic function. In the past, various systems have been proposed to detect these computer viruses (for example, see Patent Document 1).

A conventional computer virus detection system like that explained above generally uses computer virus identifying information called a "signature" for pattern matching with an exec file being detected and judges that the exec file is a computer virus when the exec file contains information identical with that signature.
Patent Document 1: Japanese Patent Publication (A) No. 2004-38273

### DISCLOSURE OF THE INVENTION

### PROBLEM TO BE SOLVED BY THE INVENTION

However, with a conventional computer virus detection system, to detect a signature, a person having specialized knowledge must analyze the computer virus and find identifying information of that computer virus. This takes time. This time taken to extract a signature makes this technique insufficient for detecting fast spreading computer viruses like the recent computer viruses spreading through e-mails and may make it impossible to prevent the spread of damage.

The present invention was made to solve the conventional problem and provides a computer virus identifying information extraction system, computer virus identifying information extraction method, and computer virus identifying information extraction program able to quickly extract not information of the computer virus itself, but computer virus identifying information from information such as the header region of an exec file.

### MEANS FOR SOLVING THE PROBLEMS

The computer virus identifying information extraction system of the present invention extracts computer virus identifying information used for detecting a computer virus and is comprised of an acquiring means for acquiring an exec file identified as a computer virus and an extracting means for extracting information included in a specific region predetermined as a storage region of information able to be deemed as identifying in an exec file as computer virus identifying information from an exec file acquired by the acquiring means.

Due to this configuration, information included in a specific region predetermined as a storage region of information able to be deemed as identifying in an exec file is automatically extracted as computer virus identifying information from an exec file identified as a computer virus, so computer virus identifying information can be quickly extracted.

Further, in the computer virus identifying information extraction system of the present invention, the specific region is a storage region of information where the probability of a match between a plurality of exec files is a predetermined value or less.

Due to this configuration, it is possible to suppress mistaken detection in the case of using computer virus identifying information for detection of a computer virus.

Further, in the computer virus identifying information extraction system of the present invention, when the exec file includes an offset region before the specific region, the extracting means identifies a head position of the specific region in the exec file based on an offset value of the offset region.

Due to this configuration, even if the position of the specific region in the exec file can change, that specific region can be reliably identified.

Further, in the computer virus identifying information extraction system of the present invention, the specific region is part of the header region in the exec file.

Further, in the computer virus identifying information extraction system of the present invention, the acquiring means acquires an encoded format exec file transferred by e-mail and the extracting means extracts information of a specific region in an encoded format exec file acquired by the acquiring means as computer virus identifying information.

Due to this configuration, even when an exec file is encoded and sent as an e-mail, computer virus identifying information corresponding to the encoded exec file can be extracted.

Further, in the computer virus identifying information extraction system of the present invention, the acquiring means and the extracting means handle exec files encoded by a base 64 encoding format.

An exec file sent attached to an e-mail is generally encoded by the base 64 format, so due to this configuration, computer virus identifying information corresponding to an exec file sent attached to an e-mail can be extracted.

Further, in the computer virus identifying information extraction system of the present invention, when a head position of a storage region of information able to be deemed as identifying in an exec file before encoding corresponding to the encoded format exec file is an n+1th byte and a size is m bytes, the extracting means designates the region from the first character at a position of the value of n/3×4, rounded off to the decimal point, plus 1 from the head of the encoded format exec file to the second character at the position of the value of (n+m) /3×4, rounded off to the decimal point, plus 1 as the specific region and extracts the character string from the first character to the second character as computer virus identifying information.

Further, in the computer virus identifying information extraction system of the present invention, the extracting means combines a plurality of extracted computer virus identifying information to obtain new computer virus identifying information.

Due to this configuration, by combining a plurality of computer virus identifying information extracted by the computer virus identifying information extraction system to obtain new computer virus identifying information, it is possible to greatly avoid computer virus identifying information matching between exec files and greatly suppress mistaken detection in detection of a computer virus using a signature.

Further, in the computer virus identifying information extraction system of the present invention, the exec file is an exec file compressed by a predetermined executable compression format. Further, in the computer virus identifying information extraction system of the present invention, the exec file is a general exec file format designed for Microsoft Windows®, that is, a PE (Portable Executable) format.

In an exec file compressed by a predetermined compression format in the case where the exec file format is a PE format, that is, an exec file compressed by a predetermined executable compression format, if there is a specific region predetermined as a storage region of information able to be deemed as identifying, since due to this configuration, information included in the specific region is automatically extracted as computer virus identifying information from an exec file identified as a computer virus, the computer virus identifying information can be quickly extracted. Note that the exec file format is not limited to the PE format.

Further, the computer virus identifying information extraction method of the present invention is a method in a computer virus identifying information extraction system for extracting computer virus identifying information used for detecting a computer virus, comprising an acquisition step for acquiring an exec file identified as a computer virus and an extraction step for extracting information included in a specific region predetermined as a storage region of information able to be deemed as identifying in an exec file from an exec file as computer virus identifying information from an exec file acquired by the acquiring means.

Further, in the computer virus identifying information extraction method of the present invention, the specific region is a storage region of information where the probability of a match between a plurality of exec files is a predetermined value or less.

Further, in the computer virus identifying information extraction method of the present invention, when the exec file includes an offset region before the specific region, the extraction step identifies a head position of a specific region in the exec file based on an offset value of the offset region.

Further, in the computer virus identifying information extraction method of the present invention, the specific region is a part of a header region in the exec file.

Further, in the computer virus identifying information extraction method of the present invention, the acquisition step acquires an encoded format exec file transferred by e-mail and the extraction step extracts information of a specific region in an encoded format exec file acquired by the acquisition step as computer virus identifying information.

Further, in the computer virus identifying information extraction method of the present invention, the acquisition step and the extraction step handle exec files encoded by a base 64 encoding format.

Further, in the computer virus identifying information extraction method of the present invention, when a head position of a storage region of information able to be deemed as identifying in an exec file before encoding corresponding to the encoded format exec file is an n+1th byte and a size is m bytes, the extraction step designates the region from the first character at a position of the value of n/3×4, rounded off to the decimal point, plus 1 from the head of the encoded format exec file to the second character at the position of the value of (n+m)/3×4, rounded off to the decimal point, plus 1 as the specific region and extracts the character string from the first character to the second character as computer virus identifying information.

Further, in the computer virus identifying information extraction method of the present invention, the extraction step combines a plurality of extracted computer virus identifying information to obtain new computer virus identifying information.

Further, in the computer virus identifying information extraction method of the present invention, the exec file is an exec file compressed by a predetermined executable compression format. Further, in the computer virus identifying information extraction method of the present invention, the exec file is a PE format.

Further, the computer virus identifying information extraction programof the present invention is executed in a computer virus identifying information extraction system for extracting computer virus identifying information used for detecting a computer virus and has an acquisition step for acquiring an exec file identified as a computer virus and an extraction step for extracting information included in a specific region predetermined as a storage region of information able to be deemed as identifying in an exec file from an exec file as computer virus identifying information from an exec file acquired by the acquiring means.

Further, in the computer virus identifying information extraction program of the present invention, the specific region is a storage region of information where the probability of a match between a plurality of exec files is a predetermined value or less.

Further, in the computer virus identifying information extraction program of the present invention, when the exec file includes an offset region before the specific region, the extraction step identifies a head position of a specific region in the exec file based on an offset value of the offset region.

Further, in the computer virus identifying information extraction program of the present invention, the specific region is a part of a header region in the exec file.

Further, in the computer virus identifying information extraction program of the present invention, the acquisition step acquires an encoded format exec file transferred by e-mail and the extraction step extracts information of a specific region in an encoded format exec file acquired by the acquisition step as computer virus identifying information.

Further, in the computer virus identifying information extraction program of the present invention, the acquisition step and the extraction step handle exec files encoded by a base 64 encoding format.

Further, in the computer virus identifying information extraction program of the present invention, when a head position of a storage region of information able to be deemed as identifying in an exec file before encoding corresponding to the encoded format exec file is an n+1th byte and a size is m bytes, the extraction step designates the region from the first character at a position of the value of n/3×4, rounded off to the decimal point, plus 1 from the head of the encoded format exec file to the second character at the position of the value of (n+m) /3×4, rounded off to the decimal point, plus 1 as the specific region and extracts the character string from the first character to the second character as computer virus identifying information.

Further, in the computer virus identifying information extraction program of the present invention, the extraction step combines a plurality of extracted computer virus identifying information to obtain new computer virus identifying information.

Further, in the computer virus identifying information extraction program of the present invention, the exec file is an exec file compressed by a predetermined executable compression format. Further, in the computer virus identifying information extraction program of the present invention, the exec file is a PE format.

### EFFECT OF THE INVENTION

The present invention automatically extracts information included in a specific region predetermined as a storage region of information able to be deemed as identifying in an exec file from an exec file as computer virus identifying information from an exec file identified as a computer virus, so can quickly extract computer virus identifying information.

### BRIEF DESCRIPTION OF THE DRAWINGS

[FIG. 1] is a view showing an example of the configuration of a computer system.
[FIG. 2] is a view showing the configuration of a header of an exec file.
[FIG. 3] is a view showing match rates of header items.
[FIG. 4] is a flowchart of the operation of signature extraction by a server.
[FIG. 5] is a view of the correspondence between signature items and signatures.
[FIG. 6] is a view showing the results of a detection experiment of computer viruses.
[FIG. 7] is a view showing the results of a detection experiment of computer viruses compressed in an executable format.

### DESCRIPTION OF THE NOTATIONS

- 100: server
- 200: signature database
- 240: dangerous exec file database
- 280: virus incubating system
- 300-1 to 300-k, 310-1 to 310-j: PC
- 400: local area network
- 500: Internet

### BEST MODE FOR WORKING THE INVENTION

The computer virus identifying information extraction system automatically extracts information included in a specific region predetermined as a storage region of information able to be deemed as identifying in an exec file from an exec file as computer virus identifying information from an exec file identified as a computer virus and thereby realizes quick extraction of computer virus identifying information.

### EXAMPLE 1

Below, the best mode for working the present invention will be explained based on the drawings.

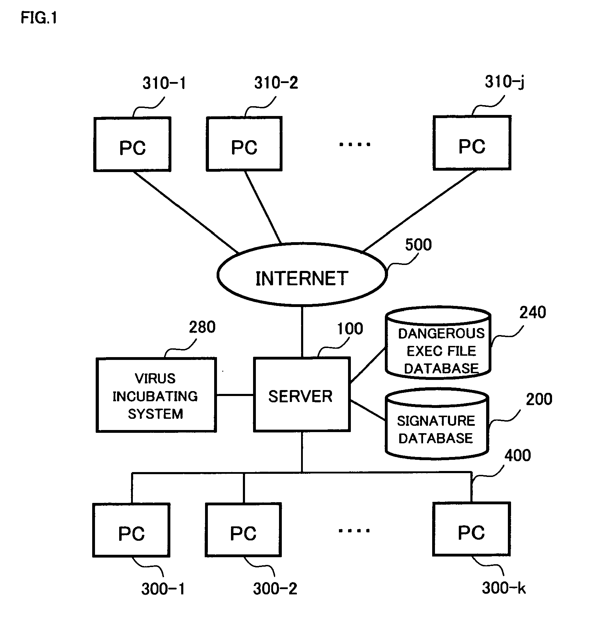

An example of the configuration of a computer system in an embodiment of the present invention is shown in FIG. 1. The computer system shown in FIG. 1 functions as a gateway or a mail server etc. and is comprised of a server 100 relaying communication between a local area network (LAN) 400 and the Internet 500, a signature database 200 storing identifying information of computer viruses, that is, signatures, a dangerous exec file database 240 storing dangerous exec files which may be infected by a virus, a virus incubating system 280 incubating viruses from attached files of e-mails at a high speed, personal computers (PC) 300-1 to 300-k connected to the local area network 400 (hereinafter these PCs 300-1 to 300-k being referred to all together as the "PCs 300"), and PCs 310-1 to 310-j connected to the Internet 500 (hereinafter these PCs 310-1 to 310-j being referred to all together as the "PCs 310"). This computer system operates loaded with Microsoft Windows® as the operating system.

The present invention relates to the processing after acquiring an exec file identified as a computer virus, but for reference an example of acquisition will be explained below.

Whether the exec file is a computer virus is judged for example by the following routine. That is, when the server 100 receives a file attached to an e-mail from the Internet 500, the extender of this file is identified. In Windows®, the extender of an exec file which may be a computer virus is one of "exe", "com", "bat", "scr", "lnk", and "pif". For this reason, when the identified extender is one of "exe", "com", "bat", "scr", "lnk", and "pif", the server 100 attaches identification information ID to the exec file having the extender. It attaches the identification information ID to the exec file having that extender, copies the exec file as a dangerous exec file, and transfers the exec file to the virus incubating system 280. Next, the server 100 stores the original exec file together with the ID as a dangerous exec file in the dangerous exec file database 240. Further, the server 100 places the virus incubating system 280 in a monitored state by its monitoring function.

The virus incubating system280 converts the base 64 format exec file to a binary format exec file for execution. Further, the virus incubating system 280 is provided with the function of monitoring whether the system registry or the file has been tampered with or if virus mail has been issued in a Windows® environment and returns the results of execution and the ID attached to the exec file to the server 100.

The server 100 analyzes the results of execution and judges if the exec file executed by the virus incubating system 280 is a computer virus.

In the above explanation, the case of the server 100 processing an e-mail received from the Internet 500 was envisioned, but the present invention can be applied even when processing an e-mail received from the LAN 400. Further, the above server 100 determines if the exec file executed by the virus incubating system 280 is a computer virus, then processes the received e-mail. In the case, judgment of the virus incubating system 280 takes time and may have an effect on the processing performance of e-mails. For this purpose, the server 100 can transfer a received e-mail to the destination PC before the judgment of the virus incubating system 280. The server 100 extracts the signature at the point when judging that the exec file is a computer virus. The above an example of processing for acquiring an exec file identified as a computer virus.

Next, the server 100 automatically extracts a signature based on information of a specific region in a header of an exec file identified as a computer virus.

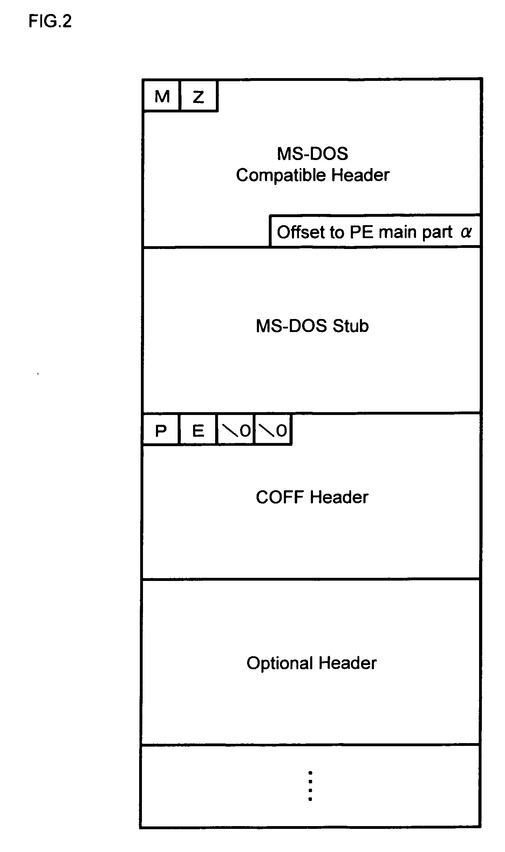

The configuration of the header of the exec file is shown in FIG. 2. An exec file in Windows® is comprised of a PE (Portable Executable) format. Its header, as shown in FIG. 2, is comprised of an "MS-DOS® Compatible Header", "MS-DOS®Stub", "COFF (Common Object File Format) Header"(COFF Header), and "Optional Header" header regions.

Among these header regions, the MS-DOS®Compatible Header and MS-DOS®Stub are lower compatible. Depending on the exec file, these sometimes are not present. Therefore, information of the header item in the MS-DOS®Compatible Header and MS-DOS®Stub as offset regions is not suitable for extraction of a signature. Note that when an MS-DOS® Compatible Header and MS-DOS®Stub are present, the magnitudes of the MS-DOS®Compatible Header and MS-DOS®Stub regions can be changed. The total of the magnitudes (number of bytes) is set as the "offset main part" at the end of the MS-DOS® Compatible Header.

On the hand, the COFF Header and Optional Header are present in all exec files in Windows®. For this reason, in the embodiment, the server 100 uses information on the header item included in the COFF Header and Optional Header for extraction of a signature.

The inventors prepared 1000 different Windows®exec files and investigated the probability of header items in the COFF Header and Optional Header matching when extracting any two files from among these exec files.

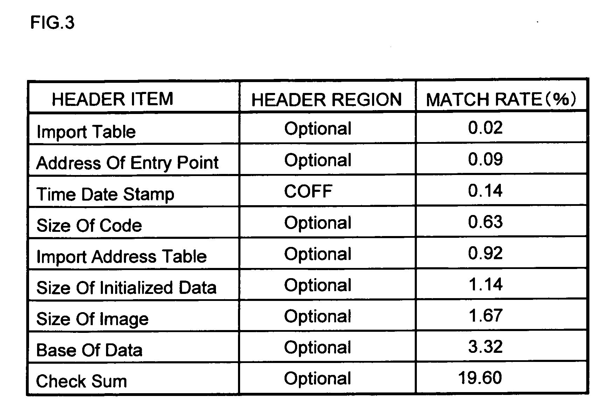

The match rates of the header items found by this investigation are shown in FIG. 3. In FIG. 3, the match rates of header items and the header regions to which those header items belong are shown between exec files for the header items. Further, FIG. 3 shows the 10 top header items with the lowest match rates, in other words, the highest probability of differing among exec files.

To suppress mistaken detection in detection of a computer virus using a signature, the server 100 preferably uses a header item with a match rate between exec files in extraction of a signature of a predetermined value (for example, 0.5%) or less. In FIG. 3, the header item with the lowest match rate is the "Import Table". Therefore, the server 100 most preferably uses this "Import Table" for signature extraction. The "Import Table" has a size of 8 bytes. The position from the head to the 129th byte of the COFF Header is the head position. Therefore, when there is no MS-DOS®Compatible Header and MS-DOS®Stub, in the "Import Table", the position from the head of the exec file to the 129th byte is the head position. On the hand, when there is an MS-DOS®Compatible Header and MS-DOS® Stub and their sizes are the α bytes shown in the "Offset main part", in the "Import Table", the position from the head of the exec file to the 129+αth byte is the head position.

Below, the operation at the time of extraction of the signature by the server 100 will be explained.

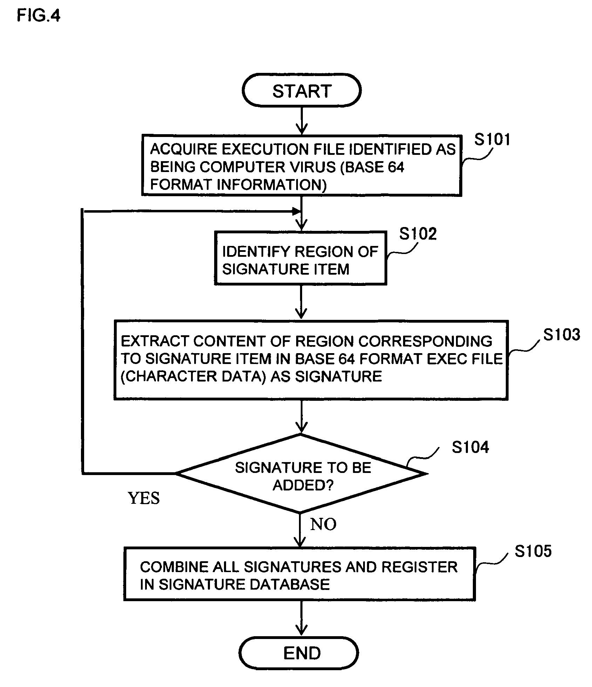

A flowchart of the operation at the time of extraction of the signature by the server 100 is shown in FIG. 4. Note that below, the case where the exec file attached to an e-mail is a computer virus and the signature for detecting the computer virus is automatically extracted will be explained.

The server 100 acquires an exec file identified as a computer virus (S101). This acquire exec file is information encoded by the base 64 format. Specifically, when the server 100 judges that the exec file is a computer virus, it reads out the exec file corresponding to the ID from the dangerous exec file database 240. Further, when judging that the exec file is not a computer virus, it reads out the exec file corresponding to the ID from the dangerous exec file database 240 and transfers it to the destination PC in the PCs 300.

The server 100 acquires an exec file of the base 64 format identified as a computer virus, then identifies a region of the header item (signature item) suitable for extraction of a signature (S102).

The server 100 reads out the content of the region corresponding to the header item (signature item) in the base 64 format exec file and extracts it as a signature (S103).

The server 100 judges if there is a signature to be added by combining a plurality of signatures to obtain a new signature (S104). If there is a signature to be added, the operation from S102 on is repeated.

On the one hand, when there is no signature to be added, the control routine proceeds to S105, where the server 100 combines all extracted signatures to obtain a new signature which it stores in the signature database 200 (S105).

Here, the specific method of identification of S102 will be explained in brief. For example, when the "Import Table" is the signature item in a binary format exec file, when there are no MS-DOS®Compatible Header and MS-DOS®Stub, the 8-byte region from the 129th byte to the 136th byte from the head of the exec file is identified as the region of the signature item. Further, when there are an MS-DOS®Compatible Header and MS-DOS®Stub and their sizes are the α bytes shown in the "Offset main part", the 8 byte region of the 129+αth byte to the 136+αth byte from the head of the exec file is identified as the region of the signature item.

In general, an exec file attached to an e-mail is a base 64 encoding format and is converted from binary data to character data for transmission. Therefore, the signature used for detection of a computer virus preferably corresponds to the character data.

When the head position of the region of the signature item in a binary data exec file is the n+1th byte and the region of the signature item has a size of m bytes, the server 100 extracts the character at the position of the value of n/3×4, rounded off to the decimal point, plus 1 from the head of the exec file of the character data after encoding by the base 64 format to the character of the position of the value of (n+m)/3×4, rounded off to the decimal point, plus 1 as the signature.

For example, when the "Import Table" is the signature item, when there is no MS-DOS®Compatible Header and MS-DOS®Stub, the position of the 129th byte from the head of the exec file is the head position of the region of the signature item. That signature item has a size of 8 bytes. Therefore, the 12 byte characters from the position of 128/3×4, rounded off to the decimal point, plus 1 (171th byte) from the head of the exec file of the encoded character data to the position of (128+8)/3×4, rounded off to the decimal point, plus 1 (182th byte) becomes the signature.

On the one hand, when there are an MS-DOS®Compatible Header and MS-DOS®Stub and they have a size of α bytes shown in the "Offset main part", the position of the 129+αth byte from the head of the exec file is the head position of the region of the signature item and the signature item has a size of 8 bytes. Therefore, the characters of the position of (128+α)/3×4, rounded off to the decimal point, plus 1 from the head of the exec file of the encoded character data to the position of (128+α+8)/3×4, rounded off to the decimal point, plus 1 become the signature.

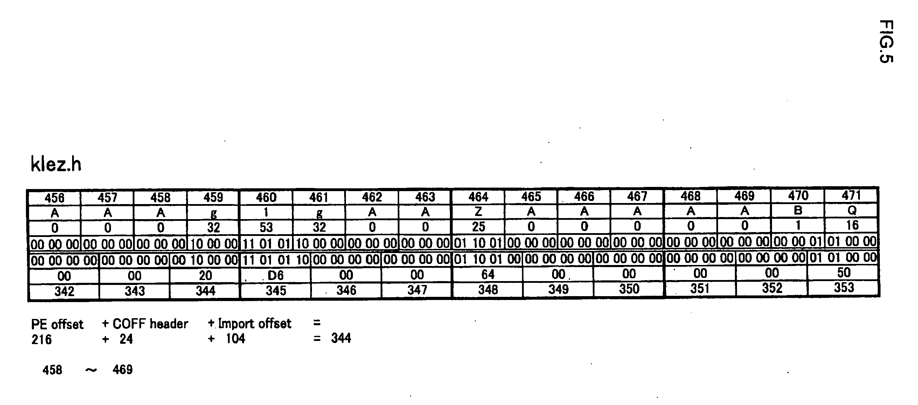

The specific correspondence of the signature items and signatures is shown in FIG. 5. FIG. 5 shows the content of the "Import Table" of the binary exec file infected by the Klez.h virus. When n=128+α=344, the head position is the 345th byte. The 8 bytes (HEX20,HEXD6------,HEX00) from the 345th byte to the 352th byte are the content of the "Import Table".

On the one hand, when the exec file infected with the Klez.h virus is a base 64 format, the head position is the 459th byte, and the 12-byte character data (A,g,-----,A) from the 459th byte to the 470th byte is the content of the "Import Table".

The inventor conducted a computer virus detection experiment using signatures extracted according to the embodiment. Note that in this experiment, "Import Table" was used as a single signature item. Further, the signatures are automatically extracted by the technique shown in FIG. 4 for all computer viruses under detection. Further, the inventors prepared all base 64 format computer viruses under detection and 1000 non-computer virus exec files obtained by base 64 format encoding (general exec file) and performed pattern matching with the above extracted signatures.

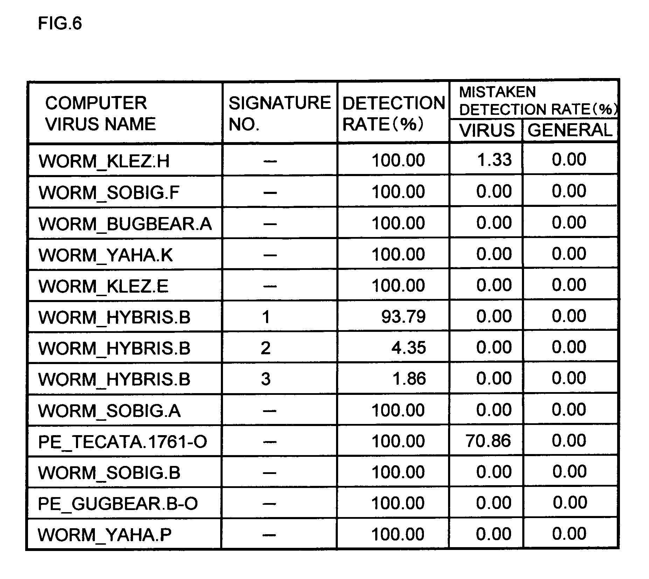

The results of the computer virus detection experiment are shown in FIG. 6. In FIG. 6, the "computer virus names" are the names of the computer viruses under detection used for the experiment, that is, names in the Trendmicro computer virus detection software "Antivirus". For example, "WORM KLEZ.H" is a preview infection type computer virus, while "WORM_SOBIG.F" is a mail infection type virus. Further, "signature no." is the no. for identification of each signature in the case where a plurality of signatures are used for a specific computer virus, "detection rate" is the probability of detection of the computer virus corresponding to a signature when using a signature, "mistaken detection rate (virus)" is the probability of mistaken detection of another computer virus as that computer virus, and "mistaken detection rate (general)" is the probability of mistaken detection of an exec file not a computer virus as that computer virus.

Among the computer viruses, there are three types of variations of the "WORM_HYBRIS.B". Therefore, three types of signatures are extracted corresponding to the variations.

As shown by the detection rate in FIG. 6, computer viruses other than "WORM_HYBRIS.B" are reliably detected by using their corresponding signatures.

On the one hand, three types of signatures are extracted for the "WORM_HYBRIS.B" as explained above. When the signature of Signature No. 1 was used, the detection rate was 93.79%, when the signature of Signature No. 2 was used, the detection rate was 4.35%, while when the signature of Signature No. 3 was used, the detection rate was 1.86%. The total of these detection rates was 100%. These results show that if treating the three types of variations of the "WORM_HYBRIS.B" as separate computer viruses and extracting three types of signatures corresponding to these variations, the overall detection rate of the "WORM_HYBRIS.B" becomes 100%, so there is no problem.

Further, the mistaken detection rate (virus) for the "WORM_KLEZ.H" and PE_TECATA.1761-0" did not become 0%. However, this result shows that in the detection of "WORM_KLEZ.H", "PE_TECATA.1761-O" was mistakenly detected and in the detection of "PE_TECATA.1761-O", "WORM_KLEZ.H" was mistakenly detected. This was due to the presence of a computer virus of a state of the "WORM_KLEZ.H" further infected by "PE_TECATA.1761-O". That is, the mistaken detection rate (virus) did not become 0% only because of the presence of a computer virus of the "WORM_KLEZ.H" and the "PE_TECATA.1761-O". There was substantially no mistaken detection.

Further, the mistaken detection rate (general) in FIG. 6 is 0% for all computer viruses under detection. A high detection precision is therefore shown.

In this way, in the computer system of the embodiments, the server 100 identifies a region of the header item with a high possibility of being an identifying value in the exec file encoded by the base 64 format identified as being a computer virus as the region of the signature item and automatically extracts the corresponding signature. Therefore, there is no need, like in the past, for a person having specialized knowledge in the detection of a signature to analyze the computer virus and find the identifying information of the computer virus and it becomes possible to quickly extract the signature. For this reason, until the formal signature is extracted by the manufacturers of computer virus detection software etc., the signature extracted by the server 100 can be used for detection of the computer virus.

Further, the header item in the exec file is unambiguously set even in the case where the exec file is compressed. Therefore, in the computer system of the embodiment, by making the region of the header item the region of the signature item, the computer virus can be detected without decompression even when the computer virus is compressed.

Further, in the computer system of the embodiment, by using the header item of the exec file, in particular the "Import Table", as the signature item, there are the following advantages in the detection of the computer virus.

Specifically, the "Import Table" is comprised of the two items of the "address" and "size". As an example, the address and size of the import directory table in the region called the "idata section" in the exec file are shown. Further, this import directory table is a part handling information relating to the DLL (Dynamic Link Library) essential for operation of the exec file of the PE format. For this reason, if the content of the "Import Table" is tampered with, there is a good possibility of the exec file being disabled.

That is, even if changing the content of the "Import Table" so that the computer virus escapes detection, there is a good possibility of the computer virus becoming disabled due to the change, so damage due to the computer virus can be prevented.

Further, the fact that even a computer virus compressed in executable manner can be detected by the computer system of the embodiment was confirmed by experiments of the inventors. In this experiment, in the same way as above, the "Import Table" was used as the signature item. Further, signatures were automatically extracted by the technique shown in FIG. 4 for all computer viruses under detection.

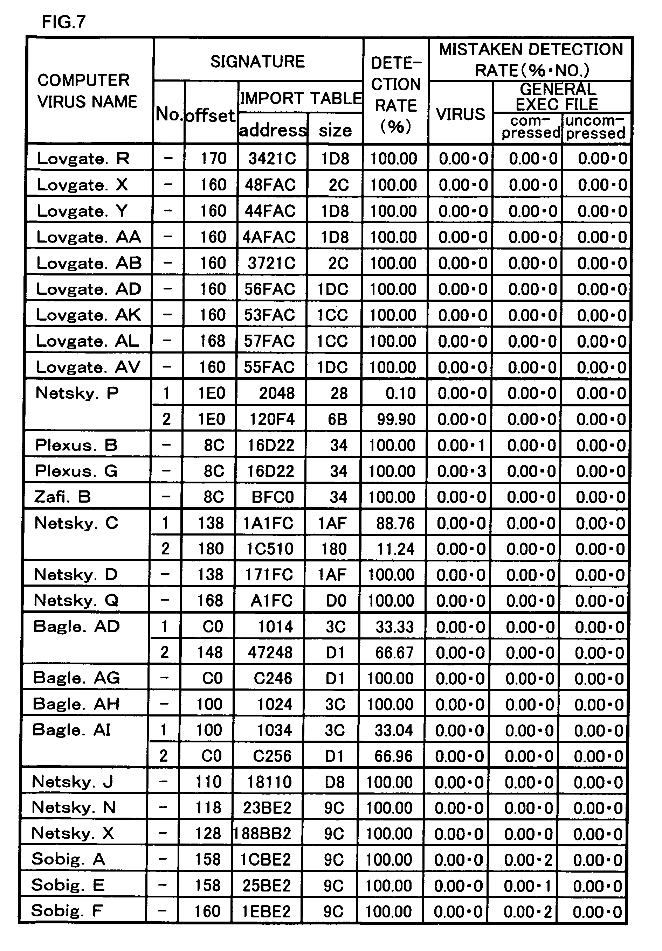

The results of the experiment for detection of computer viruses compressed in an executable manner are shown in FIG. 7. In FIG. 7, the "computer virus names" are the names of the computer viruses under detection used for the experiment, that is, names in the Trendmicro computer virus detection software "Antivirus". Further, "Signature No." is the No. for identification of each signature in the case where a plurality of signatures are used for a specific computer virus, "offset" is the offset value from the head of the file of the computer virus to the "Import Table" of the header item used for the signature, the "address" and "size" of the "Import Table" are the address and size of the import directory table in the files of the computer viruses, "detection rate" is the probability of detection of the computer virus corresponding to a signature when using a signature, "mistaken detection rate (general exec file with compression)" is the probability of a general exec file not a computer virus and compressed by the same compression format as the computer virus (compressed general exec file) being mistakenly detected as that computer virus, and the mistaken detection rate (general exec file with no compression) is the probability of an uncompressed format exec file not a computer virus (uncompressed general exec file) being mistakenly detected as that computer virus.

As shown by the detection rate in FIG. 7, computer viruses other than "Netsky.P", "Netsky.C", "Bagle.AD", and "Bagle.AI" are reliably detected by using the corresponding signatures.

On the one hand, for "Netsky. P", two types of signatures were extracted. When the signature of Signature No. 1 was used, the detection rate was 0.10%, while when the signature of Signature No. 2 was used, the detection rate was 99.90%. The total of these detection rates became 100%. This result shows that by treating the two types of variations of "Netsky.P" as separate computer viruses and extracting two types of signatures corresponding to the variations, the detection rate of "Netsky. P" as a whole becomes 100%, so there is no problem. The same is true for "Netsky.C", "Bagle.AD", and "Bagle.AI". By treating the two types of variations as separate computer viruses and extracting two types of signatures corresponding to the variations, the overall detection rate becomes 100%. This result shows that when the content of the "Import Table" varies in the computer viruses, only a signature which is identifying for each variation and of the minimum necessary extent is produced.

Further, in detection of "Plexus.B" and "Plexus.G", other computer viruses are mistaken detected, but the computer virus detection software used for the experiment defines the mistakenly detected computer viruses as being the same as "Plexus.B" and "Plexus.G", so this was not substantially mistaken detection.

Further, when the compression format of the computer virus is other than the single type tElock, regardless of the general exec file being compressed or not, the probability of the general exec file being mistakenly detected as a computer virus being 0% was confirmed. On the one hand, when the compression format of the computer virus is tElock, the general compressed exec file is sometimes mistakenly detected as a computer virus ("Sobig.A", "Sobig.E", and "Sobig.F" of FIG. 7), but the mistaken detection rate is low and within the practical range for a noncontinuous detection filter.

However, with executable compression, the content of the head changes depending on the version of the compression software and the compression options. In FIG. 7, "Netsky.J" is compressed using tElock version 0.71 while the other computer viruses are compressed using tElock version 0.98. This result shows that for a general exec file and a computer virus to match in content of the "Import Table", not only must the compression formats be the same, but also the compression software versions must be the same and, further, the various types of options designated in the execution of the compression software must be the same. Therefore, even if the compression formats are the same, the probability of a general exec file and a computer virus matching in "Import Table", in other words, the probability of the general exec file being mistakenly detected as a computer virus, is considered extremely small.

Note that in the above-mentioned embodiment, mainly the "Import Table" was made the signature item, but another header item with a low probability of matching between exec files may also be made the signature item.

Further, in the above-mentioned embodiment, the server 100 extracted the signature, but the PCs 300 and 310 may also extract signatures and use them for detection of computer viruses

### INDUSTRIAL APPLICABILITY

As explained above, the computer virus identifying information extraction system, computer virus identifying information extraction method, and computer virus identifying information extraction program according to the present invention have the effect of enabling fast extraction of computer virus identifying information and are useful as a computer virus identifying information extraction system, computer virus identifying information extraction method, and computer virus identifying information extraction program.

## Claims

1. A computer virus identifying information extraction system extracting computer virus identifying information used for detecting a computer virus,
said computer virus identifying information extraction system **characterized by** having:
an acquiring means for acquiring an exec file identified as a computer virus and
an extracting means for extracting information contained in a specific region determined in advance as a storage region of information able to be deemed as identifying in an exec file as a computer virus identifying information from an exec file acquired by said acquiring means.

2. A computer virus identifying information extraction system as set forth in claim 1, **characterized in that** said specific region is an information storage region where a probability of a plurality of exec files matching is a predetermined value or less.

3. A computer virus identifying information extraction system as set forth in claim 1 or 2, wherein said extracting means identifies a head position of a specific region in said exec file based on an offset value of said offset region when said exec file includes an offset region before said specific region.

4. A computer virus identifying information extraction system as set forth in any one of claims 1 to 3, **characterized in that** said specific region is part of a header region in said exec file.

5. A computer virus identifying information extraction system as set forth in any one of claims 1 to 4, **characterized in that** said acquiring means acquires an encoded format exec file transferred by e-mail and **in that** said extracting means extracts information of a specific region in an encoded format exec file acquired by said acquiring means as computer virus identifying information.

6. A computer virus identifying information extraction system as set forth in claim 5, **characterized in that** said acquiring means and said extracting means handle exec files encoded by a base 64 encoding format.

7. A computer virus identifying information extraction system as set forth in claim 6, **characterized in that** when a head position of a storage region of information able to be deemed as identifying in an exec file before encoding corresponding to said encoded format exec file is an n+1th byte and a size is m bytes, said extracting means designates the region from the first character at a position of the value of n/3×4, rounded off to the decimal point, plus 1 from the head of the encoded format exec file to the second character at the position of the value of (n+m) /3×4, rounded off to the decimal point, plus 1 as said specific region and extracts the character string from said first character to said second character as computer virus identifying information.

8. A computer virus identifying information extraction system as set forth in any one of claims 1 to 7, **characterized in that** said extracting means combines a plurality of extracted computer virus identifying information to obtain new computer virus identifying information.

9. A computer virus identifying information extraction system as set forth in any one of claims 1 to 8, **characterized in that** said exec file is an exec file compressed by a predetermined executable compression format.

10. A computer virus identifying information extraction system as set forth in claim 9, **characterized in that** said exec file is a PE format.

11. A computer virus identifying information extraction method in a computer virus identifying information extraction system extracting computer virus identifying information used for detecting a computer virus,
a computer virus identifying information extraction method **characterized by** having
an acquisition step for acquiring an exec file identified as a computer virus and
an extraction step for extracting information included in a specific region predetermined as a storage region of information able to be deemed as identifying in an exec file from an exec file as computer virus identifying information from an exec file acquired by said acquiring means.

12. A computer virus identifying information extraction method as set forth in claim 11, **characterized in that** said specific region is a storage region of information where the probability of a match between a plurality of exec files is a predetermined value or less.

13. A computer virus identifying information extraction method as set forth in claim 11 or 12, **characterized in that** when said exec file includes an offset region before said specific region, said extraction step identifies a head position of a specific region in said exec file based on an offset value of said offset region.

14. A computer virus identifying information extraction method as set forth in any one of claims 11 to 13, **characterized in that** said specific region is part of a header region in said exec file.

15. A computer virus identifying information extraction method as set forth in any one of claims 11 to 14, **characterized in that** said acquisition step acquires an encoded format exec file transferred by e-mail and said extraction step extracts information of a specific region in an encoded format exec file acquired by said acquisition step as computer virus identifying information.

16. A computer virus identifying information extraction method as set forth in claim 15, **characterized in that** said acquisition step and said extraction step handle exec files encoded by a base 64 encoding format.

17. A computer virus identifying information extraction method as set forth in claim 16, **characterized in that** when a head position of a storage region of information able to be deemed as identifying in an exec file before encoding corresponding to said encoded format exec file is an n+1th byte and a size is m bytes, said extraction step designates the region from the first character at a position of the value of n/3×4, rounded off to the decimal point, plus 1 from the head of the encoded format exec file to the second character at the position of the value of (n+m)/3×4, rounded off to the decimal point, plus 1 as said specific region and extracts the character string from said first character to said second character as computer virus identifying information.

18. A computer virus identifying information extraction method as set forth in any one of claims 11 to 17, **characterized in that** said extraction step combines a plurality of computer virus identifying information to obtain new computer virus identifying information.

19. A computer virus identifying information extraction method as set forth in claims 11 to 18, **characterized in that** said exec file is an exec file compressed by a predetermined executable compression format.

20. A computer virus identifying information extraction method as set forth in claim 19, **characterized in that** said exec file is a PE format.

21. A computer virus identifying information extraction program executed in a computer virus identifying information extraction system for extracting computer virus identifying information used for detecting a computer virus,
said computer virus identifying information extraction program having
an acquisition step for acquiring an exec file identified as a computer virus and
an extraction step for extracting information included in a specific region predetermined as a storage region of information able to be deemed as identifying in an exec file from an exec file as computer virus identifying information from an exec file acquired by said acquiring means.

22. A computer virus identifying information extraction program as set forth in claim 21, **characterized in that** said specific region is a storage region of information where the probability of a match between a plurality of exec files is a predetermined value or less.

23. A computer virus identifying information extraction program as set forth in claim 21 or 22, **characterized in that** when said exec file includes an offset region before said specific region, said extraction step identifies a head position of a specific region in said exec file based on an offset value of said offset region.

24. A computer virus identifying information extraction program as set forth in any ane of claims 21 to 23, **characterized in that** said specific region is a part of a header region in said exec file.

25. A computer virus identifying information extraction program as set forth in any one of claims 21 to 24, **characterized in that** said acquisition step acquires an encoded format exec file transferred by e-mailandsaid extraction step extracts information of a specific region in an encoded format exec file acquired by said acquisition step as computer virus identifying information.

26. A computer virus identifying information extraction program as set forth in claim 25, **characterized in that** said acquisition step and said extraction step handle exec files encoded by a base 64 encoding format.

27. A computer virus identifying information extraction program as set forth in claim 26, **characterized in that** when a head position of a storage region of information able to be deemed as identifying in an exec file before encoding corresponding to said encoded format exec file is an n+1th byte and a size is m bytes, said extraction step designates the region from the first character at a position of the value of n/3×4, rounded off to the decimal point, plus 1 from the head of the encoded format exec file to the second character at the position of the value of (n+m)/3×4, rounded off to the decimal point, plus 1 as said specific region and extracts the character string from said first character to said second character as computer virus identifying information.

28. A computer virus identifying information extraction program as set forth in claims 21 to 27, **characterized in that** said extraction step combines a plurality of extracted computer virus identifying information to obtain new computer virus identifying information.

29. A computer virus identifying information extraction program as set forth in claims 21 to 28, **characterized in that** said exec file is an exec file compressed by a predetermined executable compression format.

30. A computer virus identifying information extraction program as set forth in claim 29, **characterized in that** said exec file is a PE format.
